(19)

Europäisches
Patentamt
European
Patent Office
Office européen
des brevets

(11)   **EP 3 324 592 B1**

(12)                    **EUROPEAN PATENT SPECIFICATION**

(45) Date of publication and mention
     of the grant of the patent:
     **20.04.2022   Bulletin 2022/16**

(51) International Patent Classification (IPC):
     **H04L 27/26** (2006.01)

(52) Cooperative Patent Classification (CPC):
     **H04L 27/2639**

(21) Application number: **16199382.9**

(22) Date of filing: **17.11.2016**

(54) **PROCESSING WIRELESS COMMUNICATION SIGNALS**

VERARBEITUNG VON DRAHTLOSKOMMUNIKATIONSSIGNALEN

TRAITEMENT DE SIGNAUX DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.05.2018   Bulletin 2018/21**

(73) Proprietor: **Nokia Technologies Oy
02610 Espoo (FI)**

(72) Inventors:
  • **FANG, Dong**
    **Dublin, 15 (IE)**
  • **GUAN, Lei**
    **Dublin, 15 (IE)**
  • **CLAUSSEN, Holger**
    **DUBLIN, 15 (IE)**
  • **BONFANTE, Andrea**
    **Dublin, 15 (IE)**

(74) Representative: **Mills, Julia et al
Script IP Limited
18 Bridge Street
Frome Somerset BA11 1BB (GB)**

(56) References cited:
**US-A1- 2014 169 433**

• **COHERE TECHNOLOGIES: "Performance
evaluation of OTFS waveform in single user
scenarios", 3GPP DRAFT; R1-167593
PERFORMANCE EVALUATION OF OTFS IN
SINGLE USER SCENARIOS-AM, 3RD
GENERATION PARTNERSHIP PROJECT (3GPP),
MOBILE COMPETENCE CENTRE ; 650, ROUTE
DES LUCIOLES ; F-06921 SOPHIA-ANTIPOL , no.
Gothenburg, Sweden; 20160822 - 20160826 13
August 2016 (2016-08-13), XP051142585,
Retrieved from the Internet:
URL:http://www.3gpp.org/ftp/tsg_ran/WG1_RL
1/TSGR1_86/Docs/ [retrieved on 2016-08-13]**
• **COHERE TECHNOLOGIES ET AL: "OTFS
Modulation Waveform and Reference Signals for
New RAT", 3GPP DRAFT; R1-163619 OTFS
WAVEFORM FOR NEW RAT, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Busan,
South Korea; 20160411 - 20160415 18 April 2016
(2016-04-18), XP051090363, Retrieved from the
Internet:
URL:http://www.3gpp.org/ftp/tsg_ran/WG1_RL
1/TSGR1_84b/Docs/ [retrieved on 2016-04-18]**

**EP 3 324 592 B1**

**Description**

FIELD OF THE INVENTION

The invention relates to the field of processing modulated signals used in wireless communications.

BACKGROUND

A loss of signal quality due to channel fading is a crucial factor impacting wireless system performance. Channel fading occurs due to several factors, such as time selective fading which occurs with high speed nodes where Doppler effects on the signal cause issues, and frequency selective fading which is a multipath effect due to different signals reaching the destination with different delays. In order to address these issues signal equalisation is required to align the delays of Doppler shifts and multipath effects at the recipient.

Conventionally coded signals, coded using for example, OFDM orthogonal frequency division multiplexing can only address one of these fading factors. In order to be able to address multiple channel fading factors, it has been proposed to use a signal that uses multiple dimensional physical resources simultaneously such as time, frequency and space.

One such proposed technology is OTFS orthogonal time frequency and space. This technique extends the conventional OFDM from the frequency domain to the so-called delay domain (corresponding to the frequency selective fading) and Doppler domain (corresponding to the time selective fading). A 2-dimensional 2D multicarrier waveform is generated to improve performance degraded by both multipath and Doppler shift effects by equalising both of the frequency and time selective fading simultaneously.

However, in order to be able to address these issues well OTFS requires good synchronisation on both the delay and Doppler domains which results in heavy signalling due to the 2D modulation. Moreover OTFS requires guard-bands and guard time intervals which reduces the resources available for useful signalling.

It would be desirable to be able to generate a signal that could address channel ageing while limiting guard band requirements.

Cohere Technologies: "Performance Evaluation Of OTFS Waveform In Single User Scenarios", 3GPP TSG RA WGi Meeting ~86, Gothenburg Sweden, August 22 - 26, 2016 discloses a OTFS modulation scheme where a 2D-FFT based pre-processing block is added on top of an OFDM signal transmitted by a UE. It notes that this increases the robustness of the signal to Doppler effects for a faster moving UE.

SUMMARY

The subject-matter of the invention is as defined by the claims.

Applying a Fourier Transform operation such as a discrete Fourier transform provides a frequency domain representation of a signal by relating the frequency domain of the signal to a new domain termed the delay domain. While performing an inverse Fourier Transform such as an inverse discrete Fourier transform relates the time domain of a signal to a new domain termed the Doppler domain. These two transforms can be viewed as a 2D Fourier transform or Symplectic Fourier Transform. By applying these Fourier transforms, a waveform in two dimensions is generated which allow both time selective and frequency selective fading to be addressed. Frequency selective fading occurs due to multipath effects while time selective fading occurs due to Doppler effects with a fast moving transmitter and/or receiver. The Fourier transforms on the signal spread the signal across both the time and frequency domain resulting in spreading of the different effects and providing an almost constant fading and improved quality signal. This technique is termed OTFS (orthogonal time frequency space).

One of the issues that arises with OTFS is that it requires guard-band and guard timeintervals to maintain the out-of- band emissions (OOBE) below a certain satisfactory level. The in band portion of a signal is the portion that carries the information while the spread of the portion of the signal that spreads beyond this central band does not carry useful information, may cause interference and generally degrades the quality of the signals. In this regard as the OTFS technique adopts a Symplectic Fourier transform to implement the 2D multicarrier modulation, the guard bands are unavoidably extended to 2D as well and hence spectral efficiency will be degraded. The inventors of the present invention have therefore determined that it would be advantageous to apply a filter to the signal in both of the Doppler domain (a frequency domain filter) and the delay domain (a time window). This removes or at least reduces signals that are out of band and reduces the need for a guard band to protect from interference from other signals.

In order to aid the receiver in its task of reconstituting the original signal from the two dimensional multi-carrier modulated signal, information regarding the filters and the Fourier transform operations performed may be transmitted to the receiver via a control signal.

Where both a frequency domain filter and a time domain filter are applied to the signal, then the need for both a guard band and guard time intervals are reduced and in some cases completely avoided.

In some embodiments, said two filtering processes are applied as a single combined filter process.

Although the filtering processes maybe formed as individual processes, for some embodiments they are performed as a single combined filter process which may improve the efficiency of the process and decrease the amount of hardware required. In other embodiments, filters used for conventional signalling processing such as F-OFDM may be reused for this process and in such a case it may make sense to use individual filters in order to reuse existing hardware and route the signals via these filters as required.

In some embodiments, the method further comprises applying a cyclic prefix to said signal prior to performing both said time and frequency domain filtering step.

Cyclic prefixes may be added to the signals before they are time domain filtered to ensure that the channel effect is a circular convolution which in turn may be transformed to the frequency domain using a discrete Fourier transform.

In some embodiments, the method further comprises an initial step of performing serial to parallel conversion of said modulated signal to form a plurality of parallel modulated signals; said subsequent steps, prior to said transmitting step of said two filtered two dimensional multi carrier modulated signals being performed on said plurality of parallel signals; and prior to said transmitting of said filtered two dimensional multi carrier modulated signal performing a parallel to serial conversion of the plurality of two dimensional filtered multi carrier modulated signals to form said two dimensional multi carrier modulated signal.

The processing steps performed in this method may be performed on a plurality of the signals arranged in parallel. This increases the speed of the processing and also allows matrix operations to be performed in a straightforward hardware and time efficient manner.

In some embodiments, the signal processing circuitry further comprises a serial to parallel converter operable to form a plurality of parallel signals from said modulated signal; said Fourier transform circuitry and further Fourier transform circuitry being operable to receive and transform said plurality of parallel signals; and parallel to serial conversion circuitry for performing a parallel to serial conversion on said plurality of signals to form said two dimensional multi carrier modulated signal.

Where a two dimensional filtered multi carrier signal has been used for wireless transmissions in order to reduce channel fading, then such a signal can be reformed into the modulated signal from which it stemmed, where information regarding the filtering coefficients and the Fourier transform operations are provided. Furthermore, filtering the received signal using corresponding filtering techniques improves the quality of the signal and helps reduce interference from other user equipment. In particular, the use of the filter can reduce the need for exact synchronisation between user equipment when multiple signals are sent from different user equipment as it reduces the overlap of the signals and helps in their separation.

In some embodiments, said method further comprises removing a cyclic prefix from said received two dimensional filtered multi carrier modulated signal.

In some cases the signals may have had a cyclic prefix added to it to provide circular convolution and in such a case this will be removed.

In some embodiments, the method comprises an initial step of performing a serial to parallel conversion of said received two dimensional filtered multi carrier modulated signal to form a plurality of parallel signals, said subsequent steps being performed on said plurality of parallel signals, said method comprising a final parallel to serial conversion step to convert the plurality of parallel modulated time frequency domain signals to a single modulated time frequency domain signal.

In some cases, the received signal will be formed into a plurality of parallel signals which will be processed together. This reduces the time required to process the signals and can allow efficient hardware systems applying matrix operations on the parallel signals to be used.

Further particular and preferred aspects are set out in the accompanying independent and dependent claims.

BRIEF DESCRIPTION OF THE DRAWINGS

Embodiments of the present invention will now be described further, with reference to the accompanying drawings, in which:

Figure 1 illustrates an orthogonal time frequency space OTFS system according to the prior art;
Figure 2 illustrates a corresponding two dimensional frequency multi-carrier signal processing system according to an embodiment;
Figure 3 schematically illustrates a base station according to an embodiment;
Figure 4 schematically shows a massive MIMO system and problems experienced due to a Doppler effect;
Figure 5 schematically shows a corresponding system according to an embodiment;

Figure 6 schematically illustrates how embodiments facilitate broadband vehicle to vehicle communication; and
Figure 7 shows a flow diagram illustrating steps in a method for processing signals prior to transmission according to an embodiment; and
Figure 8 shows a flow diagram illustrating steps in a method for processing signals on receipt of the signals according to an embodiment.

DESCRIPTION OF THE EMBODIMENTS

Before discussing the embodiments in any more detail, first an overview will be provided.

OTFS is a new promising waveform which can mitigate the effect of frequency-and-time selective fading by using discrete Symplectic Fourier transforms (DSFT), where multiple time-frequency sub-carriers are transmitted. The receiver collects subcarriers from the buffer and implements DSFT to recover the original modulated signals. OTFS provides a robust solution to combat channel ageing and hence shows a significant superiority in large scale antenna systems such as massive MIMO, compared with the conventional OFDM system.

However, the drawbacks of OTFS include the following:
Because OTFS simply adopts a Symplectic Fourier transform to implement the 2D multicarrier modulation, the guard bands are unavoidably extended to 2D as well and hence spectral efficiency will be degraded. As a reference, in a conventional LTE system, 10% of the allocated bandwidth is reserved as guard band. And in OTFS system, a portion of both bandwidth and TTI will have to be reserved as guard band and guard time slot, respectively, to maintain a reasonable level of 2D out-of-band emission (OOBE).

The performance of OTFS degrades where there is not alignment among 2D subcarriers across delay and Doppler domains. In other words, any OTFS system requires stringent time and frequency alignment which results in heavy signaling overhead for synchronization, especially for the uplink transmission. Non-perfect 2D time-frequency alignment will lead to significant performance degradation.

Embodiments provide a 2D filtered multicarrier waveform (2D-FMC), which waveform is based on the OTFS waveform but provides additional filtering and addresses the main issues of the OTFS system stated above, focusing on the following perspectives:

(1) Relax the synchronization constraint;
(2) Reduce the OOBE in two dimensions;
(3) Provide flexible assignment of sub-bands and symbol lengths;
(4) Offer compatibility with UFMC (universal filtered multicarrier) F-OFDM (filtered orthogonal division multiplexing).
(5) Facilitate Massive MIMO (multiple input multiple output) and V2V (vehicle to vehicle) broadband communications in high speed mobility scenarios.

A 2-dimentional filtered multicarrier (2D-FMC) waveform is provided where the 2D filter's function is to perform digital filtering at both delay and Doppler domains. In this way 2D-FMC relaxes the nearly-perfect synchronization constraint and reduces the OOBE. It provides the flexibility of assigning multicarrier symbol length and sub-bands according to the physical resource requirements. In this regard different devices require different amounts of resource such that with appropriate allocation of resource and the use of corresponding filters the resource may be divided in a non-uniform way that is more appropriate to requirements. Furthermore, the filters required may be the same or similar to those used in UFMC or F-OFDM allowing for re-use of hardware available in such a system. Additionally, as the 2D-FMC waveform is based on the OTFS waveform it also addresses the frequency-and-time selective fading or the channel ageing problem of Massive MIMO based wireless systems.

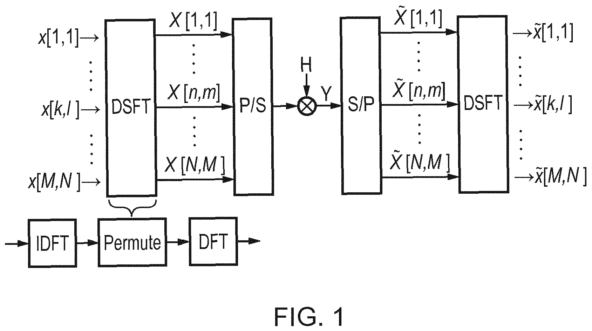

Fig. 1 schematically shows an OTFS system for processing a signal. A modulated signal such as a OFDM signal is received as multiple signals in parallel in the time frequency domain x (k,1), and these are converted using a discrete Symplectic Fourier transform into signals X (n,m) where n denotes the time index and m the frequency bins. The signals are then sent to a parallel to serial converter whereafter they are transmitted wirelessly to a receiver. At the receiver they are converted back to parallel signals and Symplectic Fourier operations are performed to regenerate the original modulated signals.

The principles behind such OTFS processing are set out below. A frequency-and-time selective fading channel can generally be characterized by the delay and Doppler response, denoted by $h(\tau, v)$, where $\tau$ describes the delay spread and $v$ describes the Doppler shift. As such, the received signal can be expressed as

$$r\left(t\right)=\iint h\left(\tau,v\right)e^{j2\pi v(t-\tau)}s(t-\tau)dvd\tau \, , \qquad (1)$$

Using the channel equation (1), we can derive a channel model in the time-frequency domain for the given bandwidth and TTI time duration (of an OFDM system), which explicitly models Doppler effects. A multiplicative channel model w.r.t frequency-and-time selective fading is obtained as

$$Y[n,m] = H[n,m]X[n,m] + V[n,m] ,$$ (2)

where $m = -\dfrac{M}{2}+1,\ldots,\dfrac{M}{2}$ denotes the frequency bins and $n = 0,\ldots, N-1$ (measured in OFDM symbols) denotes time index, where $N$ is the total number of OFDM symbols in the TTI. The channel time-frequency response $H[n,m]$ is transformed from the delay Doppler impulse response $h(\tau, \nu)$, given by

$$H[n,m] = \iint h(\tau, \nu) e^{j2\pi\nu nT} e^{-j2\pi m\Delta f\tau} d\nu d\tau ,$$ (3)

where $T$ is the length of the OFDM symbol (plus the CP extension).

Based on the channel equations (2) and (3), it has been proposed to map the information bearing QAM symbols $x[k,l]$ to the time-frequency symbols $X[n,m]$ via a set of 2D complex exponential basis functions

$$X[n,m] = \frac{1}{MN} \sum_{k=0}^{N-1} \sum_{l=0}^{M-1} x[k,l] b_{k,l}[n,m] ,$$ (4)

$$b_{k,l}[n,m] = e^{-j2\pi(\frac{ml}{M} - \frac{nk}{N})} ,$$

where the basis functions denoted by $b_{k,l}[n,m]$ have the following characteristics: 1) along the frequency bin dimension $m$, the basis functions $e^{-j2\pi(\frac{ml}{M})}$ constitute a set of DFT basis functions and relate the frequency domain to a new domain, which we call the delay domain; 2) along the time dimension $n$, the basis functions $e^{j2\pi(\frac{nk}{N})}$ constitute a set of IDFT basis functions and relate the time domain to another new domain, which we call the Doppler domain; and 3) in conclusion, the OTFS scheme allocates the information QAM symbols $x[k,l]$ in the delay-Doppler domain; these symbols are subsequently transformed into the familiar time-frequency domain via Eq. (6) which is shown later.

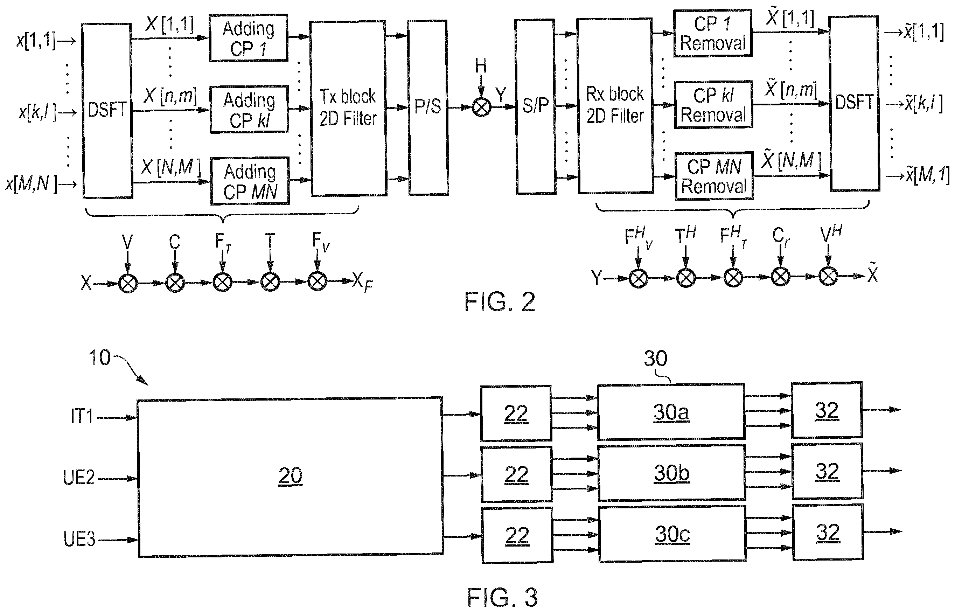

Figure 2 provides a schematic illustration of signal processing to generate a 2D-FMC waveform according to an embodiment and to generate a modulated signal from a received 2D-FMC. This circuitry may be present within a network node such as a base station, access point or other communication device such as a user equipment. In some cases both the transmission and reception circuitry may be present in each node, while in others only the reception or the transmission circuitry may be present.

A modulated signal such as a OFDM signal is input as multiple signals in parallel in the time frequency domain x (k,l) into discrete Symplectic Fourier transform circuitry where the signals are transformed to signals X (n,m) where n denotes the time index and m the frequency bins. Cyclic prefixes are then added to the individual signals to provide circular convolution and the resulting signals are filtered. In this regard a single time window filter or a frequency domain filter may be used, but in preferred embodiments a 2D filter which provides both time domain and frequency domain filtering is used. This removes out of band signals OOB and reduces the need for guard bands or guard time intervals.

The signals are then sent to a parallel to serial converter and are transmitted wirelessly as a serial signal to a receiver present in a different node in the network. The receiver performs serial to parallel conversion on the received signal, filters it using a filter corresponding to the transmission filter, removes the cyclic prefixes and then performs the Symplectic Fourier transform operations to regenerate the original modulated signal which can then be decoded.

The matrix operations that are performed on the signals are schematically shown below the block diagram of the processing circuitry. These show a different order of execution of the processes to that shown in the block diagrams. Owing to the nature of many of the operations performed the order in which they are performed is not important.

The schematic flow diagram of matrix operations shows an input modulated signal X having an inverse discrete Fourier transform operation performed on it, denoted by matrix V. This operation relates the time domain to the so-called Doppler domain which addresses the time selective fading of a channel. Cyclic prefixes are then added to the signal by matrix C to provide circular convolution and the signal is in this embodiment then filtered in the time domain. Using matrix FT A discrete Fourier transform operation denoted by matrix T which relates the frequency domain to the so-called delay domain and which address the frequency selective fading of a channel due to multipath effects is then performed and the signal is then passed through a frequency filter Fv to generate the 2D FMC signal.

The reverse matrix operations performed at the receiver after the signal has been transmitted wirelessly via a channel with properties denoted as H to generate a signal Y are also shown schematically as a set of matrix operations. Thus, the wirelessly transmitted signal Y is received and filtered in the frequency domain. A discrete Fourier transform operation is then performed followed by a filter in the time domain, the removal of the cyclic prefixes followed by an inverse discrete Fourier transform operation.

More details on the matrix operations performed are given below in which we use matrix representation to illustrate the idea of developing the 2D-FMC.

The matrix interpretation of generating the filtered 2D waveform signals can be represented as

$$\mathbf{X}_F = \left[ \mathbf{F}_\upsilon \mathbf{T} \left( \mathbf{F}_\tau \mathbf{C} \mathbf{V} \mathbf{X} \right)^T \right]^T, \qquad (5)$$

where $\mathbf{X}$ represents the modulated complex symbols, whose dimension is $N \times M$; $\mathbf{V}$ is IFFT (inverse finite Fourier transform) matrix whose dimension is $N \times N$; C is the CP (cyclic prefix) matrix with a dimension of $(N + \mu) \times N$ and $\mu$ is the length of CP; $\mathbf{F}_\tau$ is the matrix of TX band pass filter whose dimension is $(N + \mu) \times (N + \mu)$; $\mathbf{T}$ is FFT matrix whose dimension is $M \times M$; and $\mathbf{F}_\upsilon$ is the matrix of TX time-domain windowing with a dimension of $M \times M$; $\mathbf{X}_F$ represents the resulted 2D signals whose dimension is $M \times (N + \mu)$.

DSFT (discrete Symplectic Fourier transform) can be decomposed into a product of IFFT and FFT operations, given by

$$\text{Define DSFT as TV\^T'} \qquad (6)$$

As a metaplectic operator, DSFT has a special characteristic, i.e., the inverse operation of DSFT is itself:

$$\left( \text{DSFT} \right)^{-1} = \text{DSFT}. \qquad (7)$$

The above properties of DSFT allow us to reuse the FFT and IFFT components in current LTE (similar to SC-FDMA) without introducing too much additional complexity.

The received signal can be expressed as:

$$\mathbf{Y} = \left[ \mathbf{H}_\upsilon \left( \mathbf{H}_\tau \mathbf{X}_F \right)^T \right]^T + \mathbf{N}. \qquad (8)$$

where $\mathbf{Y}$'s dimension is $M \times (N + \mu)$ $\mathbf{H}_\upsilon$ represents the time-selective fading channel whose dimension is $M \times M$; $\mathbf{H}_\tau$ represents the frequency-selective fading channel whose dimension is $(N + \mu) \times (N + \mu)$; $\mathbf{N}$ is the frequency-time domain noise.

The recovery procedure can be summarized as:

$$\tilde{\mathbf{X}} = \mathbf{V}^H \mathbf{C}_r \mathbf{F}_\tau^H \left( \mathbf{T}^H \mathbf{F}_\upsilon^H \mathbf{Y}^T \right)^T, \qquad (9)$$

where $\mathbf{F}_\upsilon^H$ is the matrix of RX time-domain windowing whose dimension is $M \times M$; $\mathbf{T}^H$ is the IFFT matrix whose dimension is $M \times M$; $\mathbf{F}_\tau^H$ is the RX band pass filter whose dimension is $(N + \mu) \times (N + \mu)$; $\mathbf{C}_r$ is the CP removal matrix whose dimension is $N \times (N + \mu)$; and $\mathbf{V}^H$ is the FFT matrix whose dimension is $N \times N$.

Figure 3 shows a base station 10 processing signals destined for different devices. A modulator 20 is shown receiving the signals UEi and UE2 destined for mobile phones and IT1 destined for an Internet of Things device. The modulator 20 generates modulated signals using modulating circuitry, which may be OFDM circuitry. These signals are then sent through serial to parallel converters 22 to a plurality of signal processing circuitry 30 according to an embodiment.

This circuitry is similar to that shown as blocks "DSFT", "adding CP" and "Tx block 2D filter" in Figure 2. This plurality of signal processing circuitry 30 is arranged as parallel circuitry 30a, 30b, 30c and each generates 2D-FMC signals from the original modulated signals. The multiple signal processing circuitry 30a, 30b, 30c arranged in parallel and which process the different signals from the different devices, may have different properties and in particular signal processing circuitry 30a to which the Internet of things signal is sent has a narrowband filter block compared to the filter block of circuitry 30b and 30c. This is due to the resources allocated to the Internet of Things signal being less than those allocated to the user equipment signals. The processed parallel signals from each device are then sent to a parallel to serial converter 32 whereafter they are output via a transmitter to be transmitted wirelessly to the different devices.

It should be noted that the 2D filter shown as a single block in Figure 2 can be decomposed as two 1D filters and this allows the re-use of filters present in the hardware for modulation techniques such as UFMC and F-OFDM. The DSFT operation which is shown as a single block in Figure 2 can be decomposed as a product of IFFT and FFT, again allowing some of the hardware components of current F-OFDM or UFMC to be re-used.

In summary, at the Transmitter (TX), after generating the DFTS symbols and appending the cyclic prefix (CP) in the Doppler domain, a digital frequency-domain band pass filter covering the allocated bandwidth is applied in the Doppler domain and a time-domain windowing covering the whole TTI is applied in the delay domain. The frequency-domain band pass filters and time-domain windows jointly serve as a TX block 2D filter.

At the Receiver (RX), similarly, the block 2D filter will be jointly formed by the corresponding band pass filter applied in the Doppler domain and the time-domain window in the delay domain. Then, by passing the filtered signals to CP removal procedure and DSFT, the original modulated signal can be recovered.

The benefits of 2D-FMC w.r.t. the above technique features can be summarized as follows:

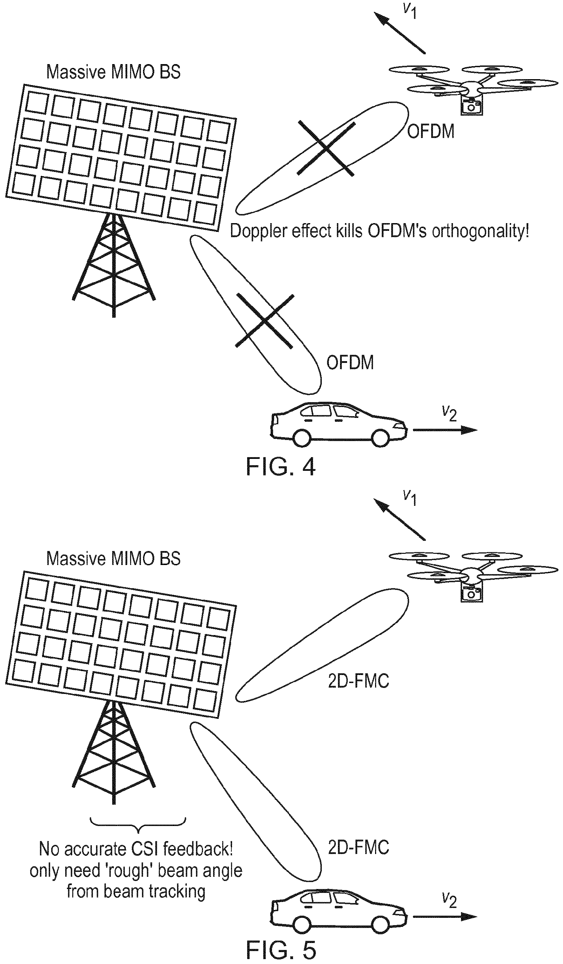

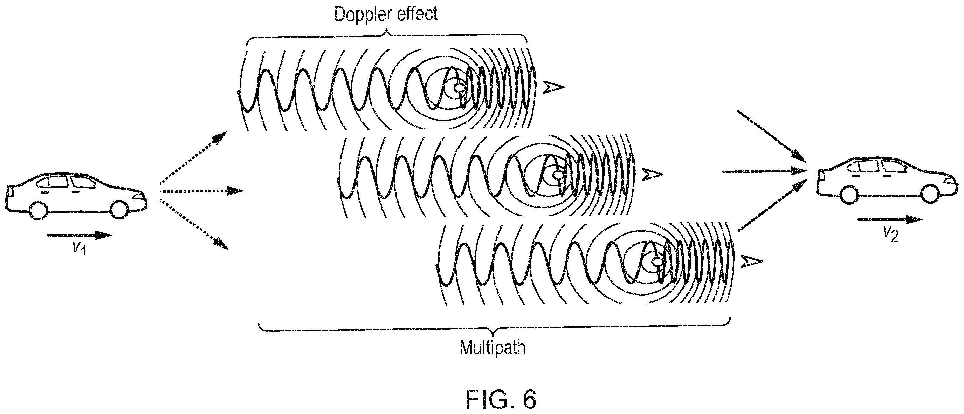

- Reducing the frequency-and-time OOBE in two dimensions;
- Relaxing the global synchronization across Doppler and delay domains.
- Providing flexible assignment of symbol lengths and sub-bands according to the physical resource requirements.
- Offering compatibility with unified filtered multicarrier (UFMC) and filtered OFDM by re-using their existing hardware components for overcoming the frequency-and-time selective fading or the channel aging problem of Massive MIMO.
- Facilitating Massive MIMO for broadband communications in frequency-and-time selective fading scenario. The conventional Massive MIMO with OFDM (as seen in Fig. 4) cannot provide the broadband service as the Doppler effect due to the high velocity breaks the subcarriers' orthogonality. In contrast, the proposed 2D-FMC allows Massive MIMO systems (as seen in Fig. 5) to serve the broadband communications with acquiring the rough beam angle only by tracking.
- Facilitating the broadband V2V communications with high speed mobility. As seen in Fig. 6, high rate communications between two vehicles with high speeds are available by using 2D-FMC as 2D-FMC overcomes the frequency-and-time selective fading.

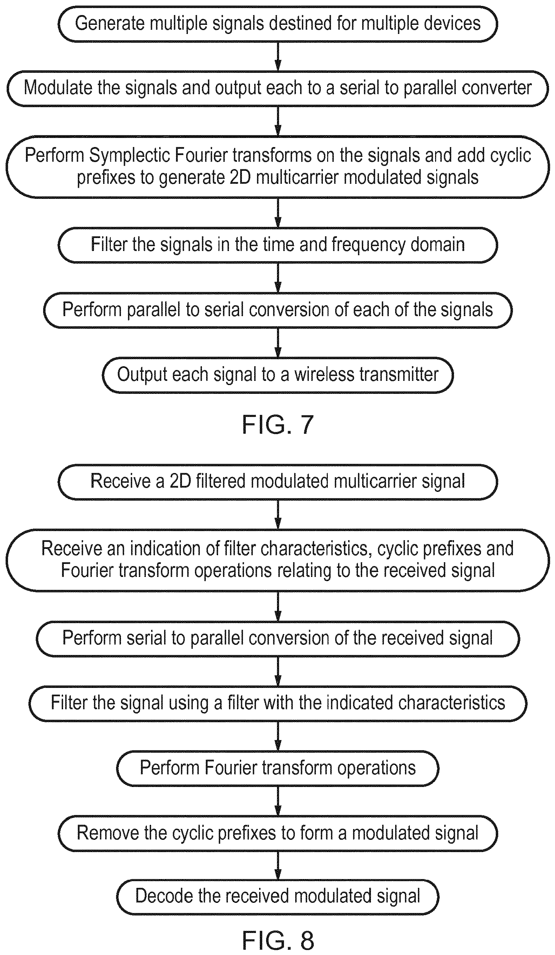

Figure 7 schematically shows steps performed in a method at a transmitter within a network node such as a base station. Signals destined for a plurality of devices are generated and modulated using for example OFDM prior to being output to a plurality of serial to parallel converters. Each of the set of parallel signals are then transformed using Symplectic Fourier transform operations to generate a 2D multicarrier signal and cyclic prefixes are added. The signals are then filtered in both the time and frequency domain to generate the 2D-FMC signals. Parallel to serial conversion is then performed on each set of signals which are then output to a wireless transmitter. It should be noted that the order shown of the Fourier transform operations, cyclic prefix additions and filtering is merely an example and these steps could be performed in a different order with the following constraints. The cyclic prefix operation should be performed after the inverse fast Fourier Transform and the filtering in the time domain should be after the cyclic prefix operation. There should be a matrix permutation of the results matrix between the IDFT and the DFT. The below gives examples of permitted orders of execution:

IDFT (inverse discrete Fourier transform, operated in a column manner)-DFT(discrete Fourier transform operated in a row manner)-matrix transpose-CP-Filteri-Filter2 or
IDFT-CP-DFT-Filter1-Filter2 or
DFT-IDFT-CP-Filter2-Filter1 or
DFT-IDFT-CP-Fiter2-Filter1

In general the following constraints in order apply: CP should be after IDFT and the filter in the time domain should be after CP, there should be a permutation between IDFT and DFT.

In summary, the matrix interpretation of generating the filtered 2D waveform signals can be represented as

$$\mathbf{X}_F = \left[ \mathbf{F}_\upsilon \mathbf{T} \left( \mathbf{F}_\tau \mathbf{CVX} \right)^T \right]^T,$$

where $\mathbf{X}$ represents the modulated complex symbols, whose dimension is $N \times M$; V is IFFT matrix whose dimension is $N \times N$; C is the CP matrix with a dimension of $(N + \mu) \times N$ and $\mu$ is the length of CP; $\mathbf{F}_\tau$ is the matrix of TX band pass filter whose dimension is $(N + \mu) \times (N + \mu)$; $\mathbf{T}$ is FFT matrix whose dimension is $M \times M$; and $\mathbf{F}_\upsilon$ is the matrix of TX time-domain windowing with a dimension of $M \times M$; $\mathbf{X}_F$ represents the resulted 2D signals whose dimension is $M \times (N + \mu)$.

The transpose in $(\mathbf{F}_\tau \mathbf{CVX})^T$ means the permutation over the resultant signal matrix. The above equation follows the order of 1. IDFT; 2. Adding the CP; 3. Filtering in time domain; 4. permutation on the resulted signal matrix; 5. DFT; 6. Filtering in frequency domain.

But we can do the other way around:

$$\mathbf{X}_F = \mathbf{F}_\tau \mathbf{CV} \left( \mathbf{F}_\upsilon \mathbf{TX} \right)^T,$$

which follows the order of DFT-Filter on time-Permutation-IDFT-CP-Filter on frequency.

In the embodiments, you can take the order of

1. IDFT;
2. Adding the CP;
3. Filtering in time domain;
4. Permutation on the resulted signal matrix;
5. DFT;
6. Filtering in frequency domain

as an example, and we can say there are many order of above operations which can generate 2D-FMC signals, such as 123456 or 564123. The only principles we need to follow is:

1. CP should be always after IDFT;
2. Filtering on time domain should be after CP.
3. The permutation must be between IDFT and DFT.

Figure 8 schematically shows steps performed in a method at a receiver within a node such as a user equipment or base station. A 2D FMC signal is received as is an indication of the filter characteristics, cyclic prefixes and Fourier transform operations used to generate the signal. These latter indications are received in a control signal. Parallel to serial conversion of the signal is then performed and the parallel signals are filtered with a filter having the indicated characteristics. The Fourier transform operations are then performed and the cyclic prefixes removed. The modulated signal can then be decoded using a conventional decoder such as an OFDM decoder if that was the form of the original modulation. It should be noted that the order shown of the Fourier transform operations cyclic prefix removal and filtering is merely an example and these steps could be performed in a different order with the following constraints. The cyclic prefix removal should be before the IDFT and the filtering in the time domain should be before the cyclic prefix removal. There should be a permutation between IDFT and DFT.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method of processing a modulated wireless communication signal prior to transmitting said signal, said method comprising:

   performing on said signal both an inverse Fourier transform operation to form a time domain representation of said signal and a Fourier transform operation to form a frequency domain representation of said signal, such that said signal is transformed to form a two dimensional multi carrier modulated signal;
   applying a frequency domain filter and a time domain filter to said signal following at least one of said Fourier transform operations; and
   transmitting said filtered two dimensional multi carrier modulated signal via a wireless channel towards a receiver; and
   transmitting a control signal indicative of a bandwidth and time window of said applied filters and indicative of said Fourier transform and inverse Fourier Transform operations applied to said modulated signal.

2. A method according claim 1, wherein said two filters are applied as a single combined filter.

3. A method according to any preceding claim, comprising applying a cyclic prefix to said signal prior to applying said filters.

4. A method according to any preceding claim, further comprising:

   an initial step of performing serial to parallel conversion of said modulated signal to form a plurality of parallel modulated signals;
   said subsequent steps, prior to said transmitting of said filtered two dimensional multi carrier modulated signal being performed on said plurality of parallel signals; and
   prior to said transmitting of said filtered two dimensional multi carrier modulated signal performing a parallel to serial conversion of the plurality of two dimensional filtered multi carrier modulated signals to form said two dimensional multi carrier modulated signal.

5. Signal processing circuitry operable to process a modulated wireless communication signal prior to said signal being transmitted, said signal processing circuitry comprising:

   Fourier transform circuitry configured to perform an inverse Fourier transform operation to form a time domain representation of said signal and further Fourier transform circuitry operable to perform a Fourier transform operation to form a frequency domain representation of said signal, such that said signal is transformed by said circuitry to form a two dimensional multi carrier modulated signal;
   a frequency domain filter and a time domain filter for filtering said signal following at least one of said Fourier transform operations; and
   signal generating circuitry configured to generate a control signal indicative of a bandwidth and time window of said frequency domain filter and said time domain filter and indicative of said Fourier transform and inverse Fourier Transform operations applied to said modulated signal.

6. Signal processing circuitry according to claim 5, further comprising:

   a serial to parallel converter operable to form a plurality of parallel signals from said modulated signal;
   said Fourier transform circuitry and further Fourier transform circuitry being operable to receive and transform said plurality of parallel signals; and
parallel to serial conversion circuitry for performing a parallel to serial conversion on said plurality of signals to form said two dimensional multi carrier modulated signal.

7. A network node comprising signal processing circuitry according to claim 5 or 6, wherein the network node is an access point or a base station and comprises a plurality of said signal processing circuitry arranged in parallel, a bandwidth or time window of said at least one filter in at least one of said signal processing circuitry being different to a bandwidth or time window of said at least one filter in another of said signal processing circuitry and further comprising transmitting circuitry for transmitting said two dimensional multi carrier modulated signal and said control signal via a wireless channel towards a receiver, wherein said network node is one of a base station or an access point.

8. A method of processing a received two dimensional filtered multi carrier modulated signal, said method comprising:

receiving a control signal indicative of a bandwidth and time window of a frequency domain filter and a time domain filter applied to said received two dimensional filtered multicarrier modulated signal and a Fourier transform and inverse Fourier transform operation;
filtering said received two dimensional filtered multicarrier modulated signal with a frequency domain filter with a bandwidth indicated by said control signal and a time domain filter with a time window indicated by said control signal;
performing an inverse Fourier transform operation and a Fourier transform operation indicated by said control signal on said received two dimensional filtered multicarrier modulated signal to convert said two dimensional filtered two dimensional multi carrier modulated signal to a modulated time frequency domain signal.

9. A method according to claim 8, further comprising removing a cyclic prefix from said two dimensional filtered multi carrier modulated signal.

10. A method according to claim 8 or 9, comprising an initial step of performing a serial to parallel conversion of said received two dimensional filtered multi carrier modulated signal to form a plurality of parallel signals, said subsequent steps being performed on said plurality of parallel signals, said method comprising a final parallel to serial conversion step to convert said plurality of parallel modulated time frequency domain signals to a single modulated time frequency domain signal.

11. A receiver for receiving and processing a two dimensional filtered multi carrier modulated signal, said receiver comprising:

receiving circuitry for said receiving two dimensional filtered multi carrier modulated signal and a control signal indicative of a bandwidth and time window of a frequency domain filter and a time domain filter applied to said received two dimensional filtered multicarrier modulated signal and of a Fourier transform and inverse Fourier transform operation;
filtering circuitry for filtering said received two dimensional filtered multi carrier modulated signal using said bandwidth and time window indicated by said control signal;
Fourier transform circuitry for performing an inverse Fourier transform operation and further Fourier transform circuitry for performing a Fourier transform operation each indicated by said control signal to convert said received two dimensional filtered multi carrier modulated signal to a modulated time frequency domain signal.

12. A network node according to claim 7 and further comprising a receiver according to claim 11.

13. A computer program which when executed by a computer is operable to control said computer to perform a method according to any one of claims 1 to 4 and 8 to 10.

**Patentansprüche**

1. Verfahren zur Verarbeitung eines modulierten Signals der drahtlosen Kommunikation vor dem Senden des Signals, wobei das Verfahren umfasst:

Durchführen sowohl einer Operation der inversen Fourier-Transformation an dem Signal, um eine Zeitbereichsdarstellung des Signals zu bilden, als auch einer Operation der Fourier-Transformation, um eine Frequenzbereichsdarstellung des Signals zu bilden, so dass das Signal transformiert wird, um ein zweidimensionales mehrträgermoduliertes Signal zu bilden;

Anwenden eines Frequenzbereichsfilters und eines Zeitbereichsfilters auf das Signal nach mindestens einer der Operationen der Fourier-Transformation; und

Übertragen des gefilterten zweidimensionalen mehrträgermodulierten Signals über einen drahtlosen Kanal zu einem Empfänger; und

Übertragen eines Steuersignals, das eine Bandbreite und ein Zeitfenster der angewendeten Filter anzeigt und die auf das modulierte Signal angewendeten Operationen der Fourier-Transformation und der inversen Fourier-Transformation anzeigt.

2. Verfahren nach Anspruch 1, wobei die beiden Filter als ein einziges kombiniertes Filter angewendet werden.

3. Verfahren nach einem der vorstehenden Ansprüche, umfassend das Anwenden eines zyklischen Präfixes auf das Signal vor der Anwendung der Filter.

4. Verfahren nach einem der vorstehenden Ansprüche, das weiter umfasst:

einen anfänglichen Schritt des Durchführens einer Reihen-Parallel-Umsetzung des modulierten Signals, um eine Vielzahl von parallelen modulierten Signalen zu bilden;

wobei die nachfolgenden Schritte vor der Übertragung des gefilterten zweidimensionalen mehrträgermodulierten Signals an der Vielzahl von parallelen Signalen durchgeführt werden; und

vor der Übertragung des gefilterten, zweidimensionalen, mehrträgermodulierten Signals Durchführen einer Parallel-Reihen-Umsetzung der Vielzahl von zweidimensionalen, gefilterten, mehrträgermodulierten Signale, um das zweidimensionale, mehrträgermodulierte Signal zu bilden.

5. Signalverarbeitungsschaltung zur Verarbeitung eines modulierten Signals der drahtlosen Kommunikation, bevor das Signal gesendet wird, wobei die Signalverarbeitungsschaltung umfasst:

eine Fourier-Transformationsschaltung zum Durchführen einer Operation der inversen Fourier-Transformation, um eine Zeitbereichsdarstellung des Signals zu bilden, und eine weitere Fourier-Transformationsschaltung zum Durchführen einer Operation der Fourier-Transformation, um eine Frequenzbereichsdarstellung des Signals zu bilden, so dass das Signal durch die Schaltung transformiert wird, um ein zweidimensionales mehrträgermoduliertes Signal zu bilden;

ein Frequenzbereichsfilter und ein Zeitbereichsfilter zum Filtern des Signal im Anschluss an mindestens eine der Operationen der Fourier-Transformation; und

eine Signalerzeugungsschaltung zum Erzeugen eines Steuersignals, das eine Bandbreite und ein Zeitfenster des Frequenzbereichsfilters und des Zeitbereichsfilters anzeigt und die auf das modulierte Signal angewendeten Operationen der Fourier-Transformation und der inversen Fourier-Transformation anzeigt.

6. Signalverarbeitungsschaltung nach Anspruch 5, die weiter umfasst:

einen Reihen-Parallel-Umsetzer zum Bilden einer Vielzahl von parallelen Signalen aus dem modulierten Signal;

wobei die Fourier-Transformationsschaltung und die weitere Fourier-Transformationsschaltung betreibbar sind zum Empfangen und Transformieren der Vielzahl von parallelen Signalen; und

eine Parallel-Reihen-Umsetzungsschaltung zum Durchführen einer Parallel-Reihen-Umsetzung an der Vielzahl von Signalen, um das zweidimensionale, mehrträgermodulierte Signal zu bilden.

7. Netzwerkknoten mit einer Signalverarbeitungsschaltung nach Anspruch 5 oder 6, wobei der Netzwerkknoten ein Zugangspunkt oder eine Basisstation ist und eine Vielzahl der parallel angeordneten Signalverarbeitungsschaltungen umfasst, wobei sich eine Bandbreite oder ein Zeitfenster des mindestens einen Filters in mindestens einer der Signalverarbeitungsschaltungen von einer Bandbreite oder einem Zeitfenster des mindestens einen Filters in einer anderen der Signalverarbeitungsschaltungen unterscheidet, und weiter eine Übertragungsschaltung zum Übertragen des zweidimensionalen mehrträgermodulierten Signals und des Steuersignals über einen drahtlosen Kanal zu einem Empfänger umfasst, wobei der Netzwerkknoten entweder eine Basisstation oder ein Zugangspunkt ist.

8. Verfahren zum Verarbeiten eines empfangenen zweidimensionalen gefilterten mehrträgermodulierten Signals, wobei das Verfahren umfasst:

Empfangen eines Steuersignals, das eine Bandbreite und ein Zeitfenster eines Frequenzbereichsfilters und eines Zeitbereichsfilters anzeigt, das auf das empfangene zweidimensionale gefilterte mehrträgermodulierte Signal angewendet wird, und eine Operation der Fourier-Transformation und eine Operation der inversen Fourier-Transformation anzeigt;

Filtern des empfangenen zweidimensionalen gefilterten mehrträgermodulierten Signals mit einem Frequenzbereichsfilter mit einer durch das Steuersignal angezeigten Bandbreite und einem Zeitbereichsfilter mit einem durch das Steuersignal angezeigten Zeitfenster;

Durchführen einer durch das Steuersignal angezeigten Operation der inversen Fourier-Transformation und einer Operation der Fourier-Transformation an dem empfangenen zweidimensionalen gefilterten mehrträgermodulierten Signal, um das zweidimensionale gefilterte mehrträgermodulierte Signal in ein moduliertes Zeit-Frequenzbereichssignal umzuwandeln.

9. Verfahren nach Anspruch 8, das weiter das Entfernen eines zyklischen Präfixes aus dem zweidimensionalen gefilterten mehrträgermodulierten Signal umfasst.

10. Verfahren nach Anspruch 8 oder 9, umfassend einen anfänglichen Schritt des Durchführens einer Reihen-Parallel-Umsetzung des empfangenen zweidimensionalen gefilterten mehrträgermodulierten Signals, um eine Vielzahl von parallelen Signalen zu bilden, wobei die nachfolgenden Schritte an der Vielzahl von parallelen Signalen durchgeführt werden, wobei das Verfahren einen abschließenden Schritt der Parallel-Reihen-Umsetzung umfasst, um die Vielzahl von parallelen modulierten Zeit-Frequenzbereichssignalen in ein einziges moduliertes Zeit-Frequenzbereichssignal umzuwandeln.

11. Empfänger zum Empfangen und Verarbeiten eines zweidimensionalen gefilterten mehrträgermodulierten Signals, wobei der Empfänger umfasst:

eine Empfangsschaltung zum Empfangen eines zweidimensionalen gefilterten mehrträgermodulierten Signals und eines Steuersignals, das eine Bandbreite und ein Zeitfenster eines Frequenzbereichsfilters und eines Zeitbereichsfilters anzeigt, das auf das empfangene zweidimensionale gefilterte mehrträgermodulierte Signal angewendet wird, und eine Operation der Fourier-Transformation und eine Operation der inversen Fourier-Transformation anzeigt;

eine Filterschaltung zum Filtern des empfangenen zweidimensionalen gefilterten mehrträgermodulierten Signals unter Verwendung der Bandbreite und des Zeitfensters, die durch das Steuersignal angezeigt werden;

eine Fourier-Transformationsschaltung zum Durchführen einer Operation der inversen Fourier-Transformation und eine weitere Fourier-Transformationsschaltung zum Durchführen einer Operation der Fourier-Transformation, die jeweils durch das Steuersignal angezeigt werden, um das empfangene zweidimensionale gefilterte mehrträgermodulierte Signal in ein moduliertes Zeit-Frequenzbereichssignal umzuwandeln.

12. Netzwerkknoten nach Anspruch 7 und weiter umfassend einen Empfänger nach Anspruch 11.

13. Computerprogramm, das bei Ausführung von einem Computer betreibbar ist zum Steuern des Computers, um ein Verfahren nach einem der Ansprüche 1 bis 4 und 8 bis 10 durchzuführen.

**Revendications**

1. Procédé de traitement d'un signal de communication sans fil modulé avant l'émission dudit signal, ledit procédé comprenant :

la réalisation, sur ledit signal à la fois d'une opération de transformée de Fourier inverse pour former une représentation dans le domaine temporel dudit signal et d'une opération de transformée de Fourier pour former une représentation dans le domaine fréquentiel dudit signal, de sorte que ledit signal soit transformé pour former un signal modulé à porteuses multiples bidimensionnel ;

l'application d'un filtre de domaine fréquentiel et d'un filtre de domaine temporel audit signal à la suite d'au moins l'une desdites opérations de transformée de Fourier ; et

l'émission dudit signal modulé à porteuses multiples bidimensionnel filtré via un canal sans fil vers un récepteur ; et

l'émission d'un signal de commande indicatif d'une bande passante et d'une fenêtre temporelle desdits filtres appliqués et indicatif desdites opérations de transformée de Fourier et de transformée de Fourier inverse appliquées audit signal modulé.

2. Procédé selon la revendication 1, dans lequel lesdits deux filtres sont appliqués comme un unique filtre combiné.

3. Procédé selon une quelconque revendication précédente, comprenant l'application d'un préfixe cyclique audit signal avant l'application desdits filtres.

4. Procédé selon une quelconque revendication précédente, comprenant en outre :

   une étape initiale de réalisation d'une conversion série-parallèle dudit signal modulé pour former une pluralité de signaux modulés parallèles ;
   lesdites étapes ultérieures, avant ladite émission dudit signal modulé à porteuses multiples bidimensionnel filtré, étant réalisées sur ladite pluralité de signaux parallèles ; et
   avant ladite émission dudit signal modulé à porteuses multiples bidimensionnel filtré, la réalisation d'une conversion parallèle-série de la pluralité de signaux modulés à porteuses multiples filtrés bidimensionnels pour former ledit signal modulé à porteuses multiples bidimensionnel.

5. Circuiterie de traitement de signal utilisable pour traiter un signal de communication sans fil modulé avant que ledit signal soit émis, ladite circuiterie de traitement de signal comprenant :

   une circuiterie de transformée de Fourier configurée pour réaliser une opération de transformée de Fourier inverse pour former une représentation dans le domaine temporel dudit signal et une circuiterie de transformée de Fourier supplémentaire apte à fonctionner pour réaliser une opération de transformée de Fourier pour former une représentation dans le domaine fréquentiel dudit signal, de sorte que ledit signal soit transformé par ladite circuiterie pour former un signal modulé à porteuses multiples bidimensionnel ;
   un filtre de domaine fréquentiel et un filtre de domaine temporel pour le filtrage dudit signal à la suite d'au moins l'une desdites opérations de transformée de Fourier ; et
   une circuiterie de génération de signal configurée pour générer un signal de commande indicatif d'une bande passante et d'une fenêtre temporelle dudit filtre de domaine fréquentiel et dudit filtre de domaine temporel et indicatif desdites opérations de transformée de Fourier et de transformée de Fourier inverse appliquées audit signal modulé.

6. Circuiterie de traitement de signal selon la revendication 5, comprenant en outre :

   un convertisseur série-parallèle apte à fonctionner pour former une pluralité de signaux parallèles à partir dudit signal modulé ;
   ladite circuiterie de transformée de Fourier et ladite circuiterie de transformée de Fourier supplémentaire étant aptes à fonctionner pour recevoir et transformer ladite pluralité de signaux parallèles ; et
   une circuiterie de conversion parallèle-série pour la réalisation d'une conversion parallèle-série sur ladite pluralité de signaux pour former ledit signal modulé à porteuses multiples bidimensionnel.

7. Nœud de réseau comprenant une circuiterie de traitement de signal selon la revendication 5 ou 6, dans lequel le nœud de réseau est un point d'accès ou une station de base et comprend une pluralité desdites circuiteries de traitement de signal agencées en parallèle, une bande passante ou une fenêtre temporelle dudit au moins un filtre dans au moins l'une desdites circuiteries de traitement de signal étant différente d'une bande passante ou d'une fenêtre temporelle dudit au moins un filtre dans une autre desdites circuiteries de traitement de signal et comprenant en outre une circuiterie d'émission pour l'émission dudit signal modulé à porteuses multiples bidimensionnel et dudit signal de commande via un canal sans fil vers un récepteur, dans lequel ledit nœud de réseau est l'un parmi une station de base ou un point d'accès.

8. Procédé de traitement d'un signal modulé à porteuses multiples filtré bidimensionnel reçu, ledit procédé comprenant :

   la réception d'un signal de commande indicatif d'une bande passante et d'une fenêtre temporelle d'un filtre de domaine fréquentiel et d'un filtre de domaine temporel appliqués audit signal modulé à porteuses multiples filtré bidimensionnel reçu et d'une opération de transformée de Fourier et de transformée de Fourier inverse ;
   le filtrage dudit signal modulé à porteuses multiples filtré bidimensionnel reçu avec un filtre de domaine fréquentiel ayant une bande passante indiquée par ledit signal de commande et un filtre de domaine temporel ayant une fenêtre temporelle indiquée par ledit signal de commande ;

la réalisation d'une opération de transformée de Fourier inverse et d'une opération de transformée de Fourier indiquées par ledit signal de commande sur ledit signal modulé à porteuses multiples filtré bidimensionnel reçu pour convertir ledit signal modulé à porteuses multiples filtré bidimensionnel en un signal de domaine temps-fréquence modulé.

9. Procédé selon la revendication 8, comprenant en outre le retrait d'un préfixe cyclique à partir dudit signal modulé à porteuses multiples filtré bidimensionnel.

10. Procédé selon la revendication 8 ou 9, comprenant une étape initiale de réalisation d'une conversion série-parallèle dudit signal modulé à porteuses multiples filtré bidimensionnel reçu pour former une pluralité de signaux parallèles, lesdites étapes ultérieures étant réalisées sur ladite pluralité de signaux parallèles, ledit procédé comprenant une étape de conversion parallèle-série finale pour convertir ladite pluralité de signaux de domaine temps-fréquence modulés parallèles en un unique signal de domaine temps-fréquence modulé.

11. Récepteur pour la réception et le traitement d'un signal modulé à porteuses multiples filtré bidimensionnel, ledit récepteur comprenant :

une circuiterie de réception pour ladite réception d'un signal modulé à porteuses multiples filtré bidimensionnel et d'un signal de commande indicatif d'une bande passante et d'une fenêtre temporelle d'un filtre de domaine fréquentiel et d'un filtre de domaine temporel appliqués audit signal modulé à porteuses multiples filtré bidimensionnel reçu et d'une opération de transformée de Fourier et de transformée de Fourier inverse ;
une circuiterie de filtrage pour le filtrage dudit signal modulé à porteuses multiples filtré bidimensionnel reçu à l'aide de ladite bande passante et de ladite fenêtre temporelle indiquées par ledit signal de commande ;
une circuiterie de transformée de Fourier pour la réalisation d'une opération de transformée de Fourier inverse et une circuiterie de transformée de Fourier supplémentaire pour la réalisation d'une opération de transformée de Fourier indiquées chacune par ledit signal de commande pour convertir ledit signal modulé à porteuses multiples filtré bidimensionnel reçu en un signal de domaine temps-fréquence modulé.

12. Nœud de réseau selon la revendication 7 et comprenant en outre un récepteur selon la revendication 11.

13. Programme d'ordinateur qui, lors de son exécution par un ordinateur, est apte à fonctionner pour commander ledit ordinateur pour réaliser un procédé selon l'une quelconque des revendications 1 à 4 et 8 à 10.

FIG. 1

FIG. 2

FIG. 3

$v_1$

Massive MIMO BS

OFDM

Doppler effect kills OFDM's orthogonality!

OFDM

$v_2$

FIG. 4

$v_1$

Massive MIMO BS

2D-FMC

2D-FMC

No accurate CSI feedback!
only need 'rough' beam angle
from beam tracking

$v_2$

FIG. 5

FIG. 6

Generate multiple signals destined for multiple devices

Modulate the signals and output each to a serial to parallel converter

Perform Symplectic Fourier transforms on the signals and add cyclic prefixes to generate 2D multicarrier modulated signals

Filter the signals in the time and frequency domain

Perform parallel to serial conversion of each of the signals

Output each signal to a wireless transmitter

FIG. 7

Receive a 2D filtered modulated multicarrier signal

Receive an indication of filter characteristics, cyclic prefixes and Fourier transform operations relating to the received signal

Perform serial to parallel conversion of the received signal

Filter the signal using a filter with the indicated characteristics

Perform Fourier transform operations

Remove the cyclic prefixes to form a modulated signal

Decode the received modulated signal

FIG. 8